# EUROPEAN PATENT APPLICATION

(11) **EP 4 545 664 A1**
(43) Date of publication of application: **30.04.2025**
(21) Application number: 23831061.9
(22) Date of filing: 12.06.2023
(51) Int. Cl.: C22C 38/00, B22F 1/00, B22F 3/15, B22F 3/18, B22F 3/24, C21D 9/46, C22C 19/03, C22C 30/00, C22C 33/02, C22C 38/08, C22C 38/10, C22F 1/00, C22F 1/10, C22F 1/16

(54) **IRON-NICKEL ALLOY FOIL, METHOD FOR MANUFACTURING IRON-NICKEL ALLOY FOIL, AND COMPONENT**

(30) Priority: 30.06.2022 JP 2022106613
(71) Applicant: NIPPON STEEL CHEMICAL & MATERIAL CO., LTD., Tokyo 103-0027 (JP)
(72) Inventor: OYAMA, Jumpei, Tokyo 103-0027 (JP); YONEMURA, Mitsuharu, Tokyo 100-8071 (JP); NAKAMURA, Hajime, Tokyo 103-0027 (JP)
(74) Representative: Vossius & Partner Patentanwälte Rechtsanwälte mbB
(86) International application number: PCT/JP2023/021715
(87) International publication number: WO 2024/004613

(57) **Abstract**

The present invention has as its technical problem the suppression of edge waves, center waves, warping, and other deformation in ultrathick (thickness 50 µm or less) Fe-Ni alloy foil and has as its object to obtain Fe-Ni alloy foil suppressed in such deformation. The Fe-Ni alloy foil according to the present invention has a positron annihilation lifetime (PAL) of 0.150 ns or more. The amount of deformation (comprehensive evaluation of edge waves, center waves, warping, and other deformation) can be made smaller than a conventional product. To obtain a microstructure mainly comprised of vacancies for making the PAL 0.150 ns or more, HIP-processing is used for producing an alloy ingot (slab). The alloy ingot can be rolled and heat treated in accordance with conventional method to obtain an Fe-Ni alloy foil.

## Description

### FIELD

The present invention relates to an Fe-Ni alloy foil and a method for manufacturing an Fe-Ni alloy foil and to a component using that Fe-Ni alloy foil.

### BACKGROUND

Along with the smaller size of electronic equipment and the higher density of mounting, the electronic components forming electronic equipment are being asked to be reduced in size or lightened in weight. For example, as a case for a secondary battery, aluminum foil (Al foil) or stainless steel foil (Stainless foil), including Fe-Ni alloy foil, is being applied. Thinner case sheet thicknesses are also being pursued for making secondary batteries lighter and thinner, but strength is also being asked to be maintained and secured. For this reason, the conventional Al foil is being changed to Stainless foil to maintain strength while reducing the thickness (for example, PTL 1).

Further, increasing thinness is being sought not only for components used for electronic equipment, but the materials and parts essential for production of that electronic equipment. For example, for the metal masks so essential for production of organic light emitting diodes (OLED), Fe-Ni alloy foil excellent in etchability, thermal expandability, etc. is being applied, but along with the higher pixel densities, greater thinness is being sought (for example, PTL 2).

In response to such demands for greater thinness of Fe-Ni alloy foil, thickness 100 µm or less Fe-Ni alloy foil is being marketed. Furthermore, Fe-Ni alloy foil with sheet thicknesses of less than 50 µm is also being sought.

### [CITATIONS LIST]

### [PATENT LITERATURE]

[PTL 1] WO2015/122523
[PTL 2] WO2020/067537

### SUMMARY

### [TECHNICAL PROBLEM]

When reducing the thickness of Fe-Ni alloy foil, nonuniform residual stress is easily generated in its process of production (in particular, rolling). To remove the residual stress, strain relief annealing etc. is performed after rolling, but in the end, the residual stress cannot be eliminated and becomes a cause of edge waves, center waves, warping, and other deformation. This deformation becomes a problem in the quality of Fe-Ni alloy foil. In particular, when the sheet thickness becomes less than 50 µm, these types of deformation appear and become important issues in quality and technology.

Therefore, the present invention has as its technical problem the suppression of edge waves, center waves, warping, and other deformation in thickness 50 µm or less Fe-Ni alloy foil and has as its object to obtain Fe-Ni alloy foil suppressed in such deformation (below, sometimes simply called "alloy foil").

### [SOLUTION TO PROBLEM]

The inventors continued with intensive R&D for solving the above technical problem and obtained the following findings:
(A) Deformation such as edge waves, center waves, and warping is caused by nonuniformity of deformation in alloy foil. This nonuniformity of deformation was believed to be caused by nonuniformity of residual stress in the alloy foil. Residual stress is known to be imparted in the process of production of alloy foil, in particular, the rolling. Due to the rolling, in the alloy sheet (there is no clear standard for thicknesses of alloy foil and alloy sheets, but, for example, a material with a sheet thickness of more than 100 µm may be called an "alloy sheet" and a material with a sheet thickness of 100 µm or less may be called "alloy foil". Below, sheet-shaped Fe-Ni alloy of a thickness of 100 µm or more before being reduced in thickness by rolling to obtain alloy foil will sometimes be called an "Fe-Ni alloy sheet" or simply an "alloy sheet".), dislocations and vacancies move causing deformation. The dislocations themselves are formed by movement and merging of vacancies. Due to these, the inventors took note on the behavior of vacancies in alloy sheet. Note that the "vacancies" in the present invention are not defects like the shrinkage pores and gas porosities at the time of solidification in castings, but mean point defects.
(B) The inventors thought that if making the vacancies in an alloy sheet uniformly disperse, at the time of rolling of the alloy sheet, the movement and merging of vacancies would become uniform and the deformation behavior in the alloy sheet would become uniform. Therefore, for example, the inventors used hot powder metallurgy (HIP method etc.) to produce an alloy ingot, rolled this to obtain alloy foil, and evaluated the deformation behavior. As a result, they confirmed that edge waves, center waves, and warping were suppressed. Due to this, they confirmed that by rolling from an alloy ingot in which vacancies are uniformly made to disperse, alloy foil in which deformation is suppressed can be obtained.
(C) As an indicator of the uniformly dispersion of vacancies in the rolled sheet, the inventors thought of using the positron annihilation lifetime (PAL) of the vacancies. PAL is a comprehensive indicator of the number of vacancies and the clustering size of vacancies etc. The larger the clustering size of vacancies, the longer the PAL, while the larger the number of vacancies, the greater the strength detected. If the number of vacancies becomes greater, the vacancies merge and as a result the clustering size of vacancies becomes larger. The inventors discovered by experiments that the greater the PAL, the more the amount of deformation is suppressed.
(D) Based on experiments with Fe-Ni alloy foil, the inventors confirmed that if the PAL is 0.150 ns (nanoseconds) or more, the amount of deformation is suppressed compared with conventional alloy foil. Further, conventional alloy foil mostly has a PAL of less than 0.150 ns. This is believed to be due to the fact that conventional production of alloy ingots is by the casting method. In the case of the casting method, it is believed that vacancies gather together in the process of solidification whereby edge dislocations are readily formed and uniformity of vacancies in the alloy ingot after solidification is obstructed.

The present invention was made based on the above findings and has as its gist the following:
[1] Fe-Ni alloy foil having
   a composition comprised of, by mass%,
   C: 0 to 0.030%,
   Si: 0 to 0.21%,
   Mn: 0 to 0.30%,
   Ni: 30.0 to 60.0%,
   Co: 0 to 5.00%,
   P: 0.01% or less,
   S: 0.01% or less, and
   a balance of Fe and impurities,
   a sheet thickness of 50 µm or less, and
   a positron annihilation lifetime (PAL) of 0.150 ns or more.
[2] The Fe-Ni alloy foil according to [1], wherein the positron annihilation lifetime (PAL) is 0.150 ns to 0.200 ns.
[3] The Fe-Ni alloy foil according to [1] or [2], wherein the sheet thickness is 20 µm or less.
[4] A method for manufacturing an Fe-Ni alloy foil according to any one of [1] to [3], comprising
   a step of preparing an Fe-Ni alloy powder having a composition comprised of, by mass%,
   C: 0 to 0.030%,
   Si: 0 to 0.21%,
   Mn: 0 to 0.30%,
   Ni: 30.0 to 60.0%,
   Co: 0 to 5.00%,
   P: 0.01% or less,
   S: 0.01% or less, and
   a balance of Fe and impurities,
   an Fe-Ni alloy ingot producing step of using the Fe-Ni alloy powder to produce an Fe-Ni alloy ingot by the HIP method, and
   a rolling step of rolling the Fe-Ni alloy ingot.
[5] The method for manufacturing an Fe-Ni alloy foil according to [4] further comprising at least one annealing step between rolling passes of the rolling step or after a final rolling pass.
[6] A component having an Fe-Ni alloy foil according to [1] to [3].

### [ADVANTAGEOUS EFFECTS OF INVENTION]

According to the present invention, it is possible to obtain Fe-Ni alloy foil suppressing deformation such as edge waves, center waves, and warping.

### BRIEF DESCRIPTION OF DRAWINGS

FIG. 1 is a figure showing one example of a relationship of the PAL and amount of deformation in Fe-Ni alloy foil.
FIG. 2 is a figure showing an outline of a vertical direction hanging test.
FIG. 3 is a conceptual figure for explaining one example of a method of measurement of a gap formed between a test piece and vertical surface in a vertical direction hanging test.

### DESCRIPTION OF EMBODIMENTS

Below, the Fe-Ni alloy foil according to the present invention will be explained. Unless particularly indicated otherwise, the "%" relating to the composition indicates the mass% in the steel. If the lower limit is not particularly prescribed or the lower limit is 0%, the case of non-inclusion (0%) is included.

### [Positron Annihilation Lifetime (PAL)]

The positron annihilation lifetime (PAL) is an indicator used for evaluation of lattice defects including vacancies in a metal material, polymer material, or other material. Sometimes this also is called the "mean positron annihilation lifetime". The PAL enables evaluation of the type of lattice defects. The PAL is a comprehensive indicator of the number of vacancies or the clustering size of the vacancies in a material. The "vacancies" in the present invention are not defects like the shrinkage pores at the time of solidification and gas porosities in castings, but mean point defects. A detailed explanation of the PAL will be omitted here, but the larger the clustering size of the vacancies, the longer the PAL. On the other hand, the larger the number of vacancies, the greater the relative strength detected (the count of γ-rays emitted at the time the positrons are annihilated, corresponding to the probability of presence). When the number of vacancies becomes greater, vacancies merge and as a result the clustering size of vacancies becomes greater and the PAL becomes longer.

The positron annihilation lifetime (PAL) can be measured by a PAL measurement apparatus. As the PAL measurement apparatus, for example, a PAL measurement apparatus made by TechnoAP or other apparatus on the market can be used. The inventors used the PAL measurement apparatus made by TechnoAP and ^{2 2} Na for the positron source for evaluation.

At the time of PAL evaluation, the evaluated material, Fe-Ni alloy foil, is cut into 10 mm square pieces, these are stacked to prepare two sets of three of these, the positron source is sandwiched by the sets of three stacked pieces of Fe-Ni alloy foil, and this is wrapped and fastened with aluminum foil to prepare a sample for PAL measurement. The prepared measurement use sample is set at the measurement apparatus and measured for positron annihilation lifetime (PAL). For the data analysis software, one attached to the measurement apparatus (for example, the PALSfit3 developed by the Denmark Technical University) may be used. At the time of measurement, to consider the Kapton film lifetime (0.3800ps) or epoxy resin lifetime (1.9044ps) or other effects, these lifetimes were fixed for the analysis.

A material produced by a conventional casting method (cast material) is equivalently free of vacancies. The lattice defects are mainly comprised of dislocations. Further, in the case of the cast material, dislocations are not uniformly introduced in the whole in the process of solidification. Put simply, at the surface and center part of the solidified alloy ingot, the states of the dislocations differ. In the case that the defects are mainly dislocations, when the yield stress is exceeded due to stress concentration due to working, dislocations are formed and plastic deformation occurs whereby the stress is eased, but at the same time, work hardening occurs due to the interaction of the dislocations with each other. Therefore, when dislocations are nonuniformly introduced into a material, stress is locally eased and the residual stress easily becomes nonuniform.

On the other hand, in the HIP method or other hot powder metallurgy, shrinkage pores and gas porosities can be eliminated, but vacancies cannot be eliminated. Material produced by hot powder metallurgy (hot powder metallurgic material) is powder compressed and sintered isotropically at a high temperature, so it may be considered that a large number of vacancies are formed uniformly in the material. In hot powder metallurgy, the vacancies are dispersed whereby the neck parts between particles grow and sintering proceeds. That is, the material produced by hot powder metallurgy, unlike a material formed by a conventional casting method, has a microstructure with vacancies.

Vacancies are used for the climbing motion of edge dislocations and act to form dislocations due to the alignment of vacancies. Therefore, the microstructure of a hot powder metallurgic material with a long positron annihilation lifetime and a large ratio (large amount) of vacancies may be considered to become a microstructure in which dislocations can relatively easily move, since the vacancies move and easily form dislocations and the dislocations move while absorbing numerous vacancies. Such ease of formation and ease of movement of dislocations affect the stress relief of materials. Further, the remaining vacancies not used for dislocations act in the same way as solution strengthening and contribute to the base strength. Therefore, when vacancies are uniformly introduced into a material, the vacancies easily move due to rolling etc. and therefore even with a relatively light rolling load, the material will easily deform. Further, stress is eased uniformly in the material and the residual stress becomes uniform, so it is believed deformation (warping, lateral bending, etc.) can be suppressed. On the other hand, the cast material has a short positron annihilation lifetime and small ratio (small amount) of vacancies, so it is hard for edge dislocations to climb and hard for dislocations to move. That is, cast materials have dislocations nonuniformly distributed and further difficult to move, so residual stress becomes nonuniform and shape defects readily occur.

The inventors ran experiments for confirmation and as a result confirmed that if a conventional cast material, the PAL never becomes 0.150 ns or more, but if a hot powder metallurgic material, it becomes 0.150 ns or more. That is, they confirmed that if a material with defects mainly comprised of dislocations like a conventional cast material, the PAL is less than 0.150 ns, while if a material with mainly vacancies and other point defects like a hot powder metallurgic material, the PAL becomes 0.150 ns or more. Accordingly, the PAL being 0.150 ns or more may show a microstructure with lattice defects mainly comprised of vacancies and other point defects. That is, a PAL of 0.150 ns may become the boundary at which the microstructure changes from one mainly comprised of dislocations to one mainly comprised of vacancies.

### [Amount of Deformation]

The edge waves, center waves, warping, and other deformation of the Fe-Ni alloy foil occur combined, so it is difficult to individually evaluate the deformation. Therefore, to comprehensively evaluate deformation of alloy foil, the inventors thought that when hanging the alloy foil vertically, the maximum value of the amount of deformation of the alloy foil with respect to the vertical direction can be used as the amount of deformation of the alloy foil.

The inventors employed the following test method for evaluation of the amount of deformation by a vertical direction hanging test. That is, it is possible to cut alloy foil into a for example width 40 mm, length 250 mm strip for use as a test piece, hang this at a vertical flat surface (surface plate having a surface parallel to the vertical direction (vertical surface)), measure the amount of a gap between the vertical surface and test piece, and use the maximum value of that as the amount of deformation for evaluation. Normally, edge waves and center waves are formed along the rolling direction, so the long side of the test piece should be made the rolling direction. Further, when producing alloy foil, sometimes it is wound up into a coil shape. To eliminate the residual coiling arising at that time, a certain tension may be applied. For example, if a thickness 50 µm or less and width 40 mm test piece, a 100 g weight may be attached to a lower end of the test piece to cause the generation of tension. The method of measurement of the gap between the test piece and the vertical surface is not particularly limited, but it can be measured by a gap gauge or laser length measurement, image analysis by capturing a photograph, etc.

### [Positron Annihilation Lifetime (PAL) ≥ 0.150 ns]

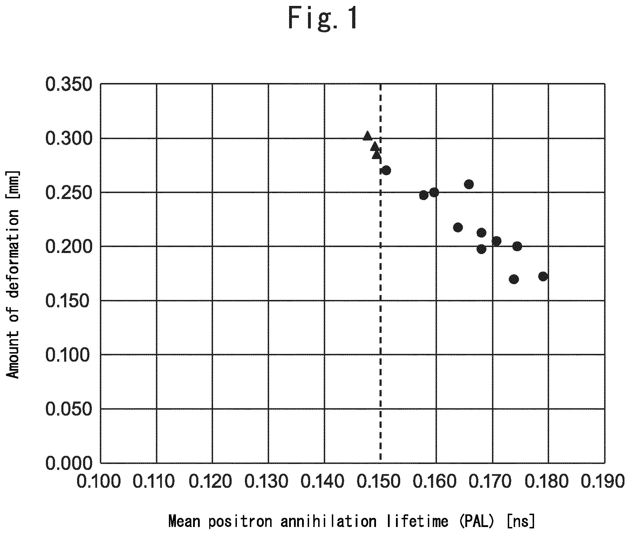

FIG. 1 shows one example of the relationship between the PAL and amount of deformation in Fe-Ni alloy foil shown in this embodiment. FIG. 1 shows the relationship between the PAL and amount of deformation of a thickness 30 µm Fe-Ni alloy foil. As shown in FIG. 1, the amount of deformation and the PAL are strongly correlated. It was confirmed that when the PAL becomes longer, the amount of deformation decreases. That is, it was confirmed that by changing the type of lattice defects in the microstructure from mainly dislocations (PAL of less than 0.150 ns) to mainly vacancies (PAL of 0.150 ns or more), deformation of alloy foil can be suppressed.

That is, it was confirmed that by making the PAL 0.150 ns or more, an Fe-Ni alloy with a microstructure mainly comprised of vacancies is obtained, the nonuniformity of the residual stress due to rolling is reduced, and as a result an Fe-Ni alloy suppressed in amount of deformation is obtained. The longer the PAL, the smaller the amount of deformation, so the PAL is preferably long. Therefore, the lower limit of the PAL is preferably 0.151 ns, 0.152 ns, 0.153 ns, 0.154 ns, 0.155 ns, 0.156 ns, 0.157 ns, 0.158 ns, 0.159 ns, 0.160 ns, 0.161 ns, 0.162 ns, 0.163 ns, 0.164 ns, or 0.165 ns.

On the other hand, while the longer the PAL, the smaller the amount of deformation, however, when the PAL becomes longer to a certain extent, large vacancies become present. These large vacancies are liable to become starting points for fracture. From experiments of the inventors, the measured value of the PAL at a practical hot powder metallurgic material did not exceed 0.200 ns. Therefore, while the upper limit of PAL does not particularly have to be limited, in the case of setting an upper limit value, it may be made 0.200 ns or preferably 0.198 ns, 0.196 ns, 0.194 ns, 0.192 ns, 0.190 ns, 0.188 ns, 0.186 ns, 0.184 ns, 0.182 ns, or 0.180 ns.

### [Composition of Fe-Ni Alloy Foil]

The composition of Fe-Ni alloy foil will be explained. As explained above, unless particularly indicated otherwise, the "%" relating to the composition indicates the mass% in the steel. If the lower limit is not particularly prescribed or the lower limit is 0%, the case of no inclusion (0%) is included.

### C: 0 to 0.030%

Carbon (C) raises the strength of alloy foil. However, if C is excessively included, the inclusions derived from carbides of alloy increase. Therefore, the C content may be 0.030% or less. Preferably it may be 0.028%, 0.026%, 0.024%, 0.022%, or 0.020%.

### Si: 0 to 0.21%

Silicon (Si) makes the coefficient of thermal expansion of an alloy increase. Fe-Ni alloy foil is inherently an alloy where a low coefficient of thermal expansion can be expected. While depending on the application, sometimes the alloy is used in a 200°C or so temperature environment. Furthermore, if the Si content is too great, the strength becomes too high and the workability of the alloy falls. For this reason, from the viewpoint of suppressing thermal expansion and the viewpoint of the workability, the Si content may be made 0.21% or less. Preferably, it may be made 0.20% or less, 0.18% or less, 0.16%, 0.14%, 0.12%, or 0.10% or less.

### Mn: 0 to 0.30%

Manganese (Mn) is used as a deoxidizing agent in place of Mg and Al so as to avoid the formation of spinel. However, if the Mn content is too high, it segregates at the grain boundaries to assist grain boundary fracture and the hydrogen embrittlement resistance conversely becomes poor, so the Mn content may be made 0.30% or less. The preferable range of the Mn content is 0.28% or less, 0.26% or less, 0.24% or less, 0.22% or less, 0.20% or less, 0.18% or less, or 0.16% or less.

### Ni: 30.0 to 60.0%

Nickel (Ni) is an important constituent for keeping the coefficient of thermal expansion of the alloy low. Also, if the Ni content is too low, the body centered cubic (bcc) structures increase and the behavior of the dislocations changes, so the Ni content may be made 30.0% or more. On the other hand, if the Ni content is too high, after the hot working (hot rolling or hot forging), bainite microstructures easily form in the alloy. Therefore, the Ni content may be made 60.0% or less. The preferable range of the Ni content may be made, at the lower limit side, 31.0% or more, 31.5% or more, 32.0% or more, 32.5% or more, 33.0% or more, 33.5% or more, 34.0% or more, 34.5% or more, 35.0% or more, 35.2% or more, or 35.4% or more and may be made, at the upper limit side, 59.0% or less, 58.0% or less, 57.0% or less, 56.0% or less, 55.0% or less, 54.0% or less, 53.0% or less, 52.0% or less, 51.0% or less, 50.0% or less, 49.0% or less, 48.0% or less, 47.0% or less, 46.0% or less, 45.0% or less, 44.0% or less, 43.0% or less, 42.0% or less, 41.0% or less, 40.0% or less, 39.5% or less, 39.0% or less, 38.5% or less, 38.0% or less, 37.5% or less, or 37.0% or less.

### Co: 0 to 5.00%

This is a constituent enabling the coefficient of thermal expansion of the alloy to be lowered more if the amount of addition increases in relation to the amount of Ni. However, it is an element with extremely high value, so the upper limit of the Co content may be made 5.00%. Preferably, it may be made 4.50% or less, 4.00% or less, 3.50% or less, 3.00% or less, 2.50% or less, 2.00% or less, 1.50% or less, or 1.00% or less.

### [Impurities]

In addition to the above elements, the balance comprises Fe (iron) and impurities. The "impurities" are elements unintentionally included in the process of production. In particular, P, S, and other constituents may be mentioned as impurities. The contents of P and S are preferably limited to the following ranges.

### P: 0.010% or less

P segregates at the grain boundaries at the time of solidification and raises the solidification cracking sensitivity. Therefore, the P content is preferably as low as possible. For this reason, the P content is limited to 0.010% or less. Preferably, it may be 0.005% or less or 0.003% or less. The lower limit of the P content is 0%, but excessive reduction causes a rise in production costs, so realistically the content may be 0.001% or more.

### S: 0.010% or less

S segregates at the grain boundaries at the time of solidification and raises the solidification cracking sensitivity. Therefore, the S content is preferably as low as possible. For this reason, the S content is limited to 0.010% or less. Preferably, it may be 0.005% or less or 0.002% or less. The lower limit of the S content is 0%, but excessive reduction causes a rise in production costs, so realistically the content may be 0.001% or more.

As impurities, other elements may also be included as impurities if within a range not detracting from the effects of the present invention. For example, Cr, Al, Cu, Nb, Mo, Ti, Mg, Ca, Sn, V, W, Zr, B, Bi, etc. may be mentioned.

### [Sheet Thickness]

The sheet thickness of the Fe-Ni alloy foil is not particularly limited. Sheet thickness 100 µm or less alloy sheet is called "alloy foil", but the invention may also be applied to sheet thickness 100 µm or more alloy sheet. However, in general, the thinner the sheet thickness, the more easily edge waves, center waves, warping, and other deformation occurs. For this reason, application of the present invention to sheet thickness 50 µm or less Fe-Ni alloy foil is more effective. The thinner the sheet thickness, the more the effect of the present invention is enjoyed, so the thickness is preferably 45 µm or less, 40 µm or less, 35 µm or less, 30 µm or less, 25 µm or less, 20 µm or less, 15 µm or less, 10 µm or less, or 5 µm or less. The lower limit of the sheet thickness is not particularly prescribed, but from the viewpoint of industrial applicability, may be a sheet thickness of 1.0 µm or more.

### [Method for Manufacture]

The method for manufacturing an Fe-Ni alloy foil according to the present invention is not particularly limited. However, it is possible to specially modify the step of production of an alloy ingot, the rolling step, and the annealing step so as to extend the PAL. Below, this method will be explained. Note that the Fe-Ni alloy foil according to the present invention is not limited to the method for manufacture described here.

### [Step of Production of Fe-Ni Alloy]

The "step of production of an Fe-Ni alloy ingot" is the step of obtaining an ingot (steel billet, slab, etc.) of an Fe-Ni alloy having a predetermined chemical composition. For example, there is the method of refining and solidifying the molten Fe-Ni alloy, the so-called "casting method". Further, for example, there is the method of combining metal powders of a predetermined chemical composition and using an HIP (hot isostatic press) or other such for solid phase joining at a high temperature, high pressure, the so-called "hot powder metallurgy method" etc.

As explained above, the alloy ingot of the cast material produced by the conventional casting method (cast alloy ingot) is equivalently free of vacancies. The lattice defects are mainly dislocations. Further, in the case of a cast material, dislocations are not uniformly introduced in the whole in the process of solidification. Put simply, at the surface and center part of the cast alloy ingot, the methods of introduction of dislocations differ. In the case that the defects are mainly dislocations, when the yield stress is exceeded due to stress concentration due to working, dislocations are formed and plastic deformation occurs whereby the stress is eased. Therefore, in a cast alloy, when dislocations are nonuniformly introduced into the material, stress is locally eased and the residual stress easily becomes nonuniform.

On the other hand, in the HIP method or other hot powder metallurgy, shrinkage pores and gas porosities can be eliminated, but vacancies cannot be eliminated. Material produced by hot powder metallurgy (hot powder metallurgic material) is powder compressed and sintered isostatically at a high temperature, so a large number of vacancies are formed uniformly in the material. In hot powder metallurgy, the vacancies are dispersed whereby the neck parts between particles grow and sintering proceeds. That is, the material produced by hot powder metallurgy, unlike a cast material, has a microstructure with vacancies. Therefore, the HIP method or other hot powder metallurgy enables an alloy ingot with uniform formation of a large number of vacancies and with a longer PAL compared with a conventional casting method to be obtained.

### [Fe-Ni Alloy Powder Preparation Step]

If produced by hot powder metallurgy, the method for manufacture is not particularly limited. For example, the conventionally used HIP method can be applied. To cause uniform formation of vacancies in the alloy ingot produced, the metal powder used as the material in the HIP method is preferably fine grained. For example, the particle size of the metal powder may be made 500 µm or less, 400 µm or less, 300 µm or less, 200 µm or less, or 100 µm or less. The method for manufacturing the metal powder is also not particularly limited. A melt adjusted to a predetermined chemical composition by a conventional refining method can be converted to alloy powder using the atomization method etc. The refining method at this time is also not particularly limited. At the laboratory level, this can be performed by a vacuum induction heating furnace. To reduce the amount of carbon, gas constituent, and metal inclusions, the AOD (argon oxygen decarburization) method, VOD (vacuum oxygen decarburization) method, V-AOD method, etc. can be applied.

The prepared alloy powder can be placed in a metal container and HIP-processed to obtain the desired alloy ingot. By applying HIP or other hot powder metallurgy, it is possible to obtain a near net shape alloy ingot close to the final product shape. It is possible to omit the subsequent processing steps (rolling or forging or other processing).

### [Rolling Step]

The obtained Fe-Ni alloy ingot can be hot rolled or cold rolled to obtain alloy foil. In general, an Fe-Ni alloy ingot can be hot rolled to obtain a thickness 1 mm or less Fe-Ni alloy sheet, then cold rolled to obtain a desired thickness alloy foil. Both for the hot rolling and the cold rolling, conventional methods for manufacture can be employed. However, to make the PAL longer, it is preferable that the total rolling reduction in the different passes of the cold rolling not become too great. This is because when the total rolling reduction of the cold rolling becomes too great, the rolling will cause distortions to build up resulting in a high dislocation density rolled microstructure and vacancies easily being used up. The process is preferably designed so that mild rolling is performed lowering the total rolling reduction of cold rolling to an extent where the work hardening ability does not fall.

### [Annealing Step]

When producing Fe-Ni alloy foil, if the sheet thickness becomes thinner (for example, sheet thickness 100 µm or less), between rolling passes of the rolling step (in particular, cold rolling) (may be between individual rolling passes or may be between several passes) or after the final rolling, at least one annealing operation (between rolling passes, called "process annealing" and after the final rolling, called the "final annealing") may be performed. When performing annealing, both the dislocations and vacancies are reduced once and a uniform recrystallized microstructure is formed. In the case of process annealing, later rolling causes dislocations to again be introduced, but compared with unannealed rolled microstructures, the dislocation density is not that high, so dislocations easily move. Due to the cross slip of dislocations, vacancies are formed while the dislocation density also increases. As a result, longer PAL is led to. Therefore, it is preferable to perform annealing. In particular, performing process annealing between rolling operations is preferable.

As explained above, annealing may be used to eliminate the dislocations, but dislocations are not smoothly eliminated unless accompanied with recrystallization. For this reason, annealing is preferably performed at the recrystallization temperature or more as much as possible. For example, in the case of Fe-Ni alloy or stainless steel, it is preferable to perform annealing at a 700°C or more temperature. Preferably, the temperature may be made 750°C or more or 800°C or more. With annealing at less than 700°C, rolling is performed in a state with dislocations remaining, so at the final rolling, dislocations are readily introduced and the rolling load becomes smaller, but the foil becomes a high dislocation density state, the vacancies are easily used up, and as a result the PAL becomes shorter.

### [Application for Component Material]

Note that, the Fe-Ni alloy foil according to the present invention is kept from deforming even if made thinner, so can be used as a material for all sorts of components. In particular, in battery materials and other electronic equipment, demand for ultrathin alloy foil has been rising due to the needs for lighter weight, higher functions, and higher strength. It is preferably used for such component materials.

Further, while not applied to a component itself, the invention can also be applied to the parts (members) used at the time of manufacture of components. For example, the Fe-Ni alloy foil according to the present invention may be applied to an OLED metal mask. Fe-Ni alloy foil is being applied for increasing the definition of OLED metal masks due to its etchability and low thermal expandability, but increased thinness and suppression of amount of deformation are being sought for further increasing the definition.

Components (members) used for producing electronic components rather than electronic components and mechanical components such as metal masks are included in the components in the present invention.

Further, the "component having the Fe-Ni alloy foil" according to the present invention includes not only a component being produced from an Fe-Ni alloy foil, but also a component made from an Fe-Ni alloy foil.

### EXAMPLES

### [Test Material]

An Fe-Ni alloy ingot based on an Fe-36Ni alloy and adjusted to the chemical composition shown in Table 1 was used to prepare HIP materials by the HIP method and a cast material by a conventional manufacturing method. Note that the balances of the compositions in Table 1 were Fe and impurities.

First, regarding the HIP materials, melt (molten alloys) adjusted to the chemical compositions shown in Table 1 were used to make spherical alloy powders by the gas atomization method. The obtained alloy powders were sieved and the 300 µm sieved products was HIP-processed to obtain HIP materials. The HIP-processing was performed by a usual procedure. As the HIP conditions, the powders were held at a 1150°C and 120 MPa high temperature and high pressure for 3 hours to produce HIP materials. As shown in Table 1, HIP1 and HIP2 were prepared as HIP materials with different compositions.

On the other hand, for the continuously cast slab materials made by a conventional manufacturing method as comparative materials, molten metals adjusted to the chemical compositions shown in Table 1 were made to solidify, then were further again refined by the ESR method (electroslag recasting method) or VAR method (vacuum arc recasting method), then were cast by the conventional continuous casting method to obtain slabs. As shown in Table 1, a Cast Material 1 and Cast Material 2 were prepared as cast materials with different compositions.

**[Table 1]**

| | | (mass%) | | | | | |
|---|---|---|---|---|---|---|---|
| Test material | Production process | C | Si | Mn | P | S | Ni |
| HIP1 | HIP | 0.027 | 0.21 | 0.22 | 0.001 | 0.002 | 35.87 |
| HIP2 | HIP | <0.001 | <0.01 | <0.01 | <0.001 | <0.001 | 35.88 |
| Cast Material 1 | Continuous casting | 0.011 | 0.06 | 0.29 | 0.002 | 0.0004 | 36.35 |
| Cast Material 2 | Continuous casting | 0.022 | 0.19 | 0.21 | 0.004 | 0.002 | 36.21 |

The obtained test materials were rolled, annealed, and otherwise worked to obtain alloy foils. Table 2 shows the working conditions of the test materials.

The test materials of HIP1 and HIP2 were machined to obtain thickness 1 mm, 3 mm, 10 mm, and 50 mm rectangular shapes to obtain alloy sheets. The thickness 50 mm alloy sheets were hot rolled to obtain thickness 3 mm alloy sheets. Other thickness alloy sheets were not hot rolled. The thus obtained thickness 1 mm, 3 mm, and 10 mm alloy sheets were cold rolled to obtain final thickness 30 µm (0.030 mm) Fe-Ni alloy foils. Note that, materials which were process annealed in the middle of cold rolling and materials which were not process annealed were prepared.

On the other hand, for the cast materials corresponding to the conventional method for manufacture, after continuous casting, the slab thicknesses were 250 mm. After that, the slabs were hot rolled to obtain sheet thickness 300 µm (0.300 mm) alloy sheets. These were then (process) cold rolled, process annealed, and (final) cold rolled to obtain final sheet thickness 30 µm (0.030 mm) Fe-Ni alloy foils.

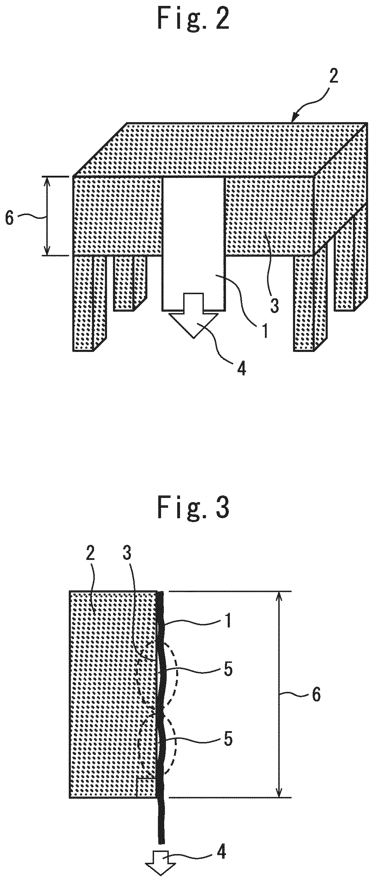

The amounts of deformation of the Fe-Ni alloy foils obtained were evaluated, as explained above, by a vertical direction hanging test. FIG. 2 shows an outline of the vertical direction hanging test. Each alloy foil was cut to a width 40 mm, length 250 mm short strip (cut so that the longitudinal direction became the rolling direction) to obtain the Test Piece 1. This was hung at the vertical surface 3 of a vertical surface plate 2 (surface plate having surface parallel to vertical direction (vertical surface)). The amounts of the gaps 5 between the vertical surface 3 and the test piece 1 were measured and the maximum value was evaluated as the amount of deformation. In the present embodiment, a 100 g weight was attached to the lower end of the test piece to generate tension 4. As shown in FIG. 3, the gaps 5 formed between the test piece 1 and the vertical surface 3 of the vertical surface plate 2 (within broken line in figure) were measured by a gap gauge (not shown). The range 6 of measurement of the gaps 5 is not particularly limited, but the total width of the vertical surface 3 may be made the measurement range 6. In these examples, that was made so. Each gap was measured four times, the average was made the amount of deformation of the gap, and the maximum value of the amounts of deformation of the gaps was assessed as the amount of deformation of the test piece.

The mean positron annihilation lifetime (PAL), as explained above, was determined by cutting the Fe-Ni alloy foil of each test material into 10 mm square pieces, stacking them to prepare two sets of three of these, sandwiching the positron source by the sets of three stacked pieces of Fe-Ni alloy foil, and wrapping and fastening this with aluminum foil to prepare a sample for PAL measurement. The prepared measurement use sample was set at the measurement apparatus and measured for positron annihilation lifetime (PAL). As the PAL measurement apparatus, a PAL apparatus made by TechnoAP was used. ^{2 2} Na was used for the positron source and evaluated. For the data analysis software, the PALSfit3 developed by the Denmark Technical University was used. At the time of measurement, to consider the Kapton film lifetime (0.3800ps) or epoxy lifetime (1.9044ps) or other effects, these lifetimes were fixed and the mean positron annihilation lifetime was analyzed for one constituent of the material.

Table 2 shows the production conditions and amounts of deformation of the test materials and the results of measurement of the PAL (mean positron annihilation lifetime). The relationship between the amount of deformation and PAL shown in Table 2 is illustrated in FIG. 1. The triangular marks in FIG. 1 show comparative examples (cast materials), while the circular marks show the examples (HIP materials).

**[Table 2]**

| Level | Test material | Hot rolling | | Cold rolling | | | | | |
|---|---|---|---|---|---|---|---|---|---|
| | | | | Process cold rolling | | Process annealing | | | Final cold rolling |
| | | Yes/no | Sheet thickness before rolling | Sheet thickness before rolling | Sheet thickness after rolling | Yes/no | Annealing temp. | Holding time | Final sheet thickness |
| | | | [mm] | [mm] | [mm] | | [°C] | [sec] | [mm] |
| Ex. 1 | HIP1 | No | - | 3.0 | 0.100 | No | - | - | 0.030 |
| Ex. 2 | | No | - | 10.0 | 0.100 | No | - | - | 0.030 |
| Ex. 3 | | No | - | 3.0 | 0.100 | Yes | 800 | 30 | 0.030 |
| Ex. 4 | | No | - | 1.0 | 0.100 | Yes | 800 | 30 | 0.030 |
| Ex. 5 | | Yes | 50 | 3.0 | 0.100 | No | - | - | 0.030 |
| Ex. 6 | | Yes | 50 | 3.0 | 0.100 | Yes | 800 | 30 | 0.030 |
| Ex. 7 | HIP2 | No | - | 3.0 | 0.100 | No | - | - | 0.030 |
| Ex. 8 | | No | - | 3.0 | 0.100 | Yes | 800 | 30 | 0.030 |
| Ex. 9 | | No | - | 3.0 | 0.100 | Yes | 700 | 30 | 0.030 |
| Ex. 10 | | Yes | 50 | 3.0 | 0.100 | No | - | - | 0.030 |
| Ex. 11 | | Yes | 50 | 3.0 | 0.100 | Yes | 800 | 30 | 0.030 |
| Comp. Ex. 1 | Cast Material 1 | Yes | 250 | 0.3 | 0.100 | Yes | 900 | 15 | 0.030 |
| Comp. Ex. 2 | | Yes | 250 | 3.0 | 0.100 | Yes | 900 | 15 | 0.030 |
| Comp. Ex. 3 | Cast Material 2 | Yes | 250 | 0.3 | 0.100 | Yes | 900 | 15 | 0.030 |

As will be understood from Table 2 and FIG. 1, the mean positron annihilation lifetime (PAL) and amount of deformation are correlated. It will be understood that when the PAL becomes longer, the amount of deformation becomes smaller. As will be understood if compared with Comparative Example 1 corresponding to a conventional product, it could be confirmed that the HIP-processed examples all had a PAL of 0.150 ns or more or smaller than the amount of deformation of Comparative Example 1. Further, from the viewpoint of the chemical composition, even if comparing Examples 1 to 6 using HIP 1 and Comparative Example 3 of the Melted Material 2 to which substantially equal alloy elements were added, it could be confirmed that the HIP materials were longer in PAL and smaller in amounts of deformation.

### [INDUSTRIAL APPLICABILITY]

The present invention can be utilized for Fe-Ni alloy foil. In particular, the effect becomes remarkable when used for an ultrathin Fe-Ni alloy foil with a sheet thickness of 50 µm or less.

### REFERENCE SIGNS LIST

1 test piece
2 vertical surface plate
3 vertical surface
4 (direction of) tension
5 gap
6 measurement range

## Claims

1. Fe-Ni alloy foil having
a composition comprised of, by mass%,
C: 0 to 0.030%,
Si: 0 to 0.21%,
Mn: 0 to 0.30%,
Ni: 30.0 to 60.0%,
Co: 0 to 5.00%,
P: 0.01% or less,
S: 0.01% or less, and
a balance of Fe and impurities,
a sheet thickness of 50 µm or less, and
a positron annihilation lifetime of 0.150 ns or more.

2. The Fe-Ni alloy foil according to claim 1, wherein the positron annihilation lifetime is 0.150 ns to 0.200 ns.

3. The Fe-Ni alloy foil according to claim 1 or 2, wherein the sheet thickness is 20 µm or less.

4. A method for manufacturing an Fe-Ni alloy foil according to claim 1 or 2, comprising
a step of preparing an Fe-Ni alloy powder having a composition comprised of, by mass%,
C: 0 to 0.030%,
Si: 0 to 0.21%,
Mn: 0 to 0.30%,
Ni: 30.0 to 60.0%,
Co: 0 to 5.00%,
P: 0.01% or less,
S: 0.01% or less, and
a balance of Fe and impurities,
an Fe-Ni alloy ingot producing step of using the Fe-Ni alloy powder to produce an Fe-Ni alloy ingot by the HIP method, and
a rolling step of rolling the Fe-Ni alloy ingot.

5. The method for manufacturing an Fe-Ni alloy foil according to claim 4, further comprising at least one annealing step between rolling passes of the rolling step or after a final rolling pass.

6. The method for manufacturing an Fe-Ni alloy foil according to claim 4, wherein the sheet thickness is 20 µm or less.

7. The method for manufacturing an Fe-Ni alloy foil according to claim 5, wherein the sheet thickness is 20 µm or less.

8. A component having an Fe-Ni alloy foil according to claim 1 or 2.

9. The component according to claim 8, wherein the sheet thickness of the Fe-Ni alloy foil is 20 µm or less.
